# EUROPÄISCHE PATENTSCHRIFT

(11) **EP 1 238 765 B1**
(45) Veröffentlichungstag und Bekanntmachung des Hinweises auf die Patenterteilung: **28.10.2009**
(21) Anmeldenummer: 02003100.1
(22) Anmeldetag: 13.02.2002
(51) Int. Cl.: B26D 7/08, B26D 7/26, B26F 1/38

(54) **Vorgespanntes Schneidwerkzeug, sowie Schneidvorrichtung umfassend ein solches Schneidwerkzeug**
Pre-stressed cutting tool and cutting device including such a cutting tool
Outil de coupe précontraint ainsi que dispositif de coupe ayant un tel outil

(30) Priorität: 21.02.2001 DE 10109933
(43) Veröffentlichungstag der Anmeldung: 11.09.2002
(73) Patentinhaber: Aichele Werkzeuge GmbH, 74564 Crailsheim (DE)
(72) Erfinder: Aichele, Wilhelm, 74564 Crailsheim (DE)
(74) Vertreter: Regelmann, Thomas

(56) Entgegenhaltungen:
- EP-A- 0 947 717
- DE-A- 3 124 053
- DE-A- 19 834 104
- US-A- 2 224 668
- US-A- 4 485 710
- US-A- 4 607 831
- US-A- 4 756 219

## Beschreibung

Die Erfindung betrifft ein Schneidwerkzeug gemäß dem Oberbegriff von Anspruch 1 und ein Prägewerkzeug gemäß dem Oberbegriff von Anspruch 11.

Ferner betrifft die Erfindung eine Schneidvorrichtung, umfassend ein Schneidwerkzeug gemäß dem Anspruch 1, und eine Prägevorrichtung, umfassend ein Prägewerkzeug gemäß dem Anspruch 11.

Ein derartiges Schneidwerkzeug wird in US 2 224 668-A, und ein derartiges Prägewerkzeug wird in EP 0 947 717-A offenbart.

Schneidvorrichtungen, umfassend ein Maschinengestell, eine Ambosswalze, welche an dem Maschinengestell drehbar gelagert ist, und ein Schneidwerkzeug, welches drehbar an dem Maschinengestell gelagert ist, wobei das Schneidwerkzeug eine mit Ambossflächen der Ambosswalze zusammenwirkende Außenhülse aufweist, an welcher eine Schneide sitzt, und ein Innenteil aufweist, sind beispielsweise aus der DE 31 24 053 A1 oder der DE 198 34 104 A1 bekannt. Die nicht vorveröffentlichten deutschen Patentanmeldungen 100 44 705.8 und 100 40 024.8 beschreiben ebenfalls solche Schneidvorrichtungen und Schneidwerkzeuge.

Mittels solcher Rotationsschneidvorrichtungen lassen sich fortlaufende Werkstoffbahnen beispielsweise aus Papier, Vliesstoffen, Textilien, Kunststoffolien oder Metallfolien beschneiden.

Aus der EP 0 947 717 A2 ist eine Verarbeitungseinrichtung bekannt, welche aus zwei bewegungsmäßig kooperierenden Elementen besteht. Beispielsweise handelt es sich um ein Walzen-/Gegenwalzenpaar. Die Walze ist am Ende einer entsprechenden Welle montiert.

Aus der US 4,756,219 ist eine Schneidvorrichtung zum Schneiden von Bahnenmaterial bekannt, welche ein Paar an Messerträgern aufweist, welche drehbar gelagert sind. Die Messerträger halten Messer; die Messer berühren sich temporär während eines Schneidvorgangs unter einer bestimmten Vorspannung. Die Vorspannung wird durch ein Biegemoment ausgeübt.

Aus der US 2,224,668 ist eine Maschine zum Schneiden von Material bekannt, umfassend eine Mehrzahl von Walzen, Sektoren, welche Schneiden tragen, die auf lösbare Weise an einer der Walzen fixiert sind, und Mittel an den Enden von einer der Walzen zum Pressen der Sektoren dicht zusammen längs der Walze, wobei die Mittel einen einstellbaren Ring aufweisen.

Der Erfindung liegt die Aufgabe zugrunde, eine Schneidvorrichtung und ein Schneidwerkzeug zu schaffen, bei denen ein Wegfedern des Schneidwerkzeugs verursacht durch seitliche Schnittkräfte minimiert ist.

Diese Aufgabe wird durch ein Schneidwerkzeug mit den Merkmalen des Anspruchs 1, und durch ein Prägewerkzeug mit den Merkmalen des Anspruchs 11 gelöst.

Es hat sich in der Praxis gezeigt, dass Schneidwerkzeuge, insbesondere bei großer Stützweite und/oder kleinem Durchmesser während eines Schneidvorgangs Transversalschwingungen quer zur Drehachse unterworfen sind, die durch seitliche Schnittkräfte verursacht werden. Diese Schwingungen lassen sich bezüglich ihrer Amplitude vermindern und/oder verringert anregen, wenn das Schneidwerkzeug vorgespannt ist. Dieser Effekt entspricht dem einer schwingenden Saite, welche gespannt wird: Dort verkleinert sich die Amplitude (und es vergrößert sich die Frequenz), wenn bei unveränderter Kraftanregung gegenüber dem ungespannten Zustand eine Zugspannung auf die Saite ausgeübt wird. Entsprechend ist, um die gleiche Amplitude bei dem gespannten Zustand zu erreichen, eine höhere Kraftbeaufschlagung notwendig.

Erfindungsgemäß wird also durch die Vorspannung die Modenstruktur des Schneidwerkzeugs derart verändert, dass Schwingungen reduziert sind, welche durch seitliche Schnittkräfte verursacht sind. Dadurch wird die Schnittqualität beim Beschneiden einer Werkstückbahn erhöht und die Standzeit des Schneidwerkzeugs erhöht sich, da die Belastung der Schneide reduziert ist.

Erfindungsgemäß hat sich durch die Vorspannung eines Schneidwerkzeugs mit einer Stützweite von 700 mm und einem Durchmesser von 300 mm eine maximale Schwingungsamplitude kleiner als 2 µm in der Mitte des Schneidwerkzeugs erreichen lassen.

Die Erhöhung der Eigenfrequenzen des Schneidwerkzeugs durch die Vorspannung wirkt sich auch günstig aus auf die Schwingungsanregbarkeit des Schneidwerkzeugs. Insbesondere tiefe Maschinenfrequenzen tragen zu einer Schwingungsanregung des Schneidwerkzeugs bei. Werden dessen Eigenfrequenzen erhöht, dann ist die Schwingungsanregbarkeit des Schneidwerkzeugs verringert.

Zur Erzielung einer Modenstruktur des Schneidwerkzeugs, durch welche ein Wegfedern bei seitlichen Schnittkräften verringert ist, ist es besonders günstig, wenn das Schneidwerkzeug zugbelastet ist. Eine solche Zugbelastung läßt sich auch auf konstruktiv günstige Weise bewirken.

Das Schneidwerkzeug ist mit einer solchen Kraft verspannt, daß eine maximale Schwingungsamplitude des Schneidwerkzeugs unterhalb eines vorgegebenen Werts liegt. Grundsätzlich ist die Vorspannungsbeaufschlagung des Schneidwerkzeugs einstellbar; erfolgt die Einstellung derart, daß die Amplitude unterhalb eines vorgegebenen Werts liegt, dann ist sichergestellt, daß die Schnittkräfte optimiert eingestellt sind und insbesondere ein Ausweichen bei seitlichen Schnittkräften minimiert ist.

Bei einer konstruktiv besonders günstigen Ausführungsform weist das Schneidwerkzeug eine Außenhülse auf, an welcher die Schneide sitzt, und weist ein Innenteil auf, wobei Außenhülse und Innenhülse gegeneinander verspannt sind mit einer Spannkraftwirkung im wesentlichen parallel zur Drehachse des Schneidwerkzeugs. Dadurch läßt sich auf einfache Weise das Schneidwerkzeug vorspannen, ohne daß das Maschinengestell und insbesondere Lager, in welchem das Schneidwerkzeug gelagert ist, modifiziert werden müssen. Durch die Verspannung des Innenteils (Kernwelle) mit der Außenhülse wird die Steifigkeit des Schneidwerkzeugs erhöht, um so die Modenstruktur des Schneidwerkzeugs hinsichtlich einer verringerten Schwingungsanregbarkeit/Amplitudenverringerung zu modifizieren.

Günstig ist es, wenn Innenteil und Außenhülse so verspannt sind, daß das Innenteil in Richtung der Außenhülse auf Zug belastet ist. Dies läßt sich auf einfache Weise insbesondere mittels Formschlußelementen wie Zugschrauben erreichen. Dadurch ist es insbesondere auch möglich, Druckkräfte, welche über die Außenhülse auf das Innenteil (die Kernwelle) ausgeübt werden, überzukompensieren, um auch bei einer Kraftbelastung durch Schnittkräfte die Schwingungsamplituden klein zu halten.

Auf konstruktiv einfache Weise lassen sich Außenhülse und Innenteil mittels Formschlußverbindungen verspannen. Die Formschlußverbindungen lassen sich auf einfache Weise anbringen. Durch entsprechende Dimensionierung der zugeordneten Formschlußelemente (Durchmesser, Länge) und durch ihre Anordnung lassen sich gezielte Vorspannungskräfte einstellen. Beispielsweise lassen sich durch acht Schrauben zwischen Außenhülse und Innenteil zwischen den jeweiligen Stirnflächen und einer Vorspannungskraft entsprechend 100 t bei einem Schneidwerkzeug mit einer Stützweite von 700 mm und einem Durchmesser von 300 mm Amplituden kleiner als 2 µm in der Mitte des Schneidwerkzeugs erreichen.

Eine Verbindungsrichtung einer Formschlußverbindung ist dabei parallel zur Drehachse des Schneidwerkzeugs orientiert und insbesondere mit hoher Präzision parallel zur Drehachse orientiert. Dadurch läßt sich gezielt eine Zugspannung zwischen Außenhülse und Innenseite des Schneidwerkzeugs einstellen.

Zur gleichmäßigen Vorspannung des Schneidwerkzeugs ist es weiterhin vorteilhaft, wenn eine Mehrzahl von Formschlußverbindungen gleichmäßig bezogen auf die Drehachse um diese angeordnet sind. Die Anordnung der Formschlußverbindungen ist dann punktsymmetrisch bezogen auf die Drehachse.

Auf eine Stirnfläche einer Außenhülse läßt sich eine Druckkraft in Richtung des Innenteils ausüben, wenn ein Formschlußelement zur Bildung einer Formschlußverbindung eine entsprechende Anlagefläche aufweist. An dem Anlageelement sitzt dann ein Schraubelement, mittels welchem eine Zugkraft auf das Innenteil ausübbar ist. Auf diese Weise läßt es sich auch erreichen, daß Druckkräfte auf das Innenteil überkompensierbar sind, d. h. daß auch bei wirkenden Schnittkräften insgesamt das Schneidwerkzeug vorgespannt bleibt, um die Schwingungsamplituden zu verringern.

Günstigerweise sind die Abmessungen eines Formschlußelements und/oder die Anzahl der Formschlußverbindungen an den Durchmesser und die Stützweite des Schneidwerkzeugs angepaßt. Bei großer Stützweite und kleinem Durchmesser kann es beispielsweise nötig sein, eine größere Anzahl von Formschlußverbindungen zu setzen, welche dann einen kleineren Durchmesser aufweisen. Andererseits kann es bei kurzer Stützweite und größerem Durchmesser genügen, eine geringere Anzahl von Formschlußverbindungen mit entsprechend größerem Durchmesser vorzusehen.

Bei einer Variante einer Ausführungsform ist das Schneidwerkzeug mit Stützringen versehen, mittels welchen dieses gegenüber der Amboßwalze abstützbar ist und/oder umgekehrt. Ein Stützring, der auch als Schmitz-Ring bezeichnet wird, hat eine abstützende Wirkung des Schneidwerkzeugs gegenüber einer Amboßwalze. Das Schneidwerkzeug läßt sich mittels Stützringen so weit auf die Amboßwalze zustellen, daß auch bei maximalen Schneidkräften noch eine ausreichende Schnittwirkung gegeben ist.

Vorteilhafterweise ist dabei bei jedem Stützring der Durchmesser einer Stützringfläche durch radiale Dehnung des Stützrings im Bereich unterhalb einer elastischen Dehnungsgrenze von dessen Material mittels einer Dehnungsvorrichtung einstellbar. Dadurch wird die Möglichkeit geschaffen, den Durchmesser der Stützringflächen variabel zu gestalten, um somit Rücksicht auf Veränderung der radialen Erstreckung, insbesondere der Schneide, zu nehmen. Beispielsweise wird zunächst bei neuer, d. h. nicht abgenutzter Schneide, der Stützring maximal, allerdings noch in einem Bereich unterhalb seiner elastischen Dehnungsgrenze, gedehnt, so daß die Stützringfläche den maximalen Durchmesser hat. Erfolgt eine Abnutzung der Schneide, so läßt sich die Dehnung durch die einstellbare Dehnungsvorrichtung reduzieren, wobei dadurch, daß die Dehnung im Bereich unterhalb der elastischen Dehnungsgrenze des Stützrings liegt, der Stützring aufgrund seines elastischen Verhaltens beim Zurückstellen der Dehnungsvorrichtung im Sinne einer geringeren Dehnung von selber schrumpft und somit der Durchmesser der Stützringfläche entsprechend der Abnutzung der Schneide reduziert werden kann.

Dehnbare Stützringe können dabei nicht nur am Schneidwerkzeug, sondern auch an der Amboßwalze oder sowohl am Schneidwerkzeug als auch an der Amboßwalze vorhanden sein. Im letztgenannten Fall, wenn Stützringe sowohl am Schneidwerkzeug als auch an der Amboßwalze vorgesehen sind und entsprechende Stützringflächen aneinander anliegen, ist ein zweifacher Einstellbereich erreichbar.

Die Dehnungsvorrichtung kann dabei zusammenwirkende und in ihrer Relativposition zueinander einstellbare Keilflächen aufweisen, um den Stützring einstellbar zu dehnen.

Dehnbare Stützringe und ihre Wirkungsweise sind in der nicht vorveröffentlichten deutschen Anmeldung Nr. 100 40 024.8 beschrieben, auf die hiermit ausdrücklich Bezug genommen wird.

Es kann dabei vorgesehen sein, daß mittels eines Formschlußelements, mit welchem eine Zugspannung auf ein Innenteil des Schneidwerkzeugs bezüglich einer Außenhülse ausübbar ist, der Durchmesser eines Stützrings einstellbar ist, d. h. daß ein Formschlußelement zur Vorspannung des Schneidwerkzeugs Teil der Dehnungsvorrichtung ist. Es läßt sich dadurch gleichzeitig das Schneidwerkzeug vorspannen und es lassen sich die Stützringe dehnen.

Alternativ kann es vorgesehen sein, daß das Schneidwerkzeug unabhängig von der Dehnung der Stützringe vorspannbar ist, d. h. daß die Formschlußelemente nicht Teil der Dehnungsvorrichtung sind. Dadurch läßt sich die Vorspannung des Schneidwerkzeugs von der Dehnbarkeit der Stützringe entkoppeln, so daß die Beeinflussung von Vorspannung parallel zur Drehachse und Dehnung der Stützringe quer und insbesondere senkrecht zur Drehachse im wesentlichen sich nicht gegenseitig beeinflussen. Beispielsweise wird zuerst das Schneidwerkzeug vorgespannt und dann wird ein Stützring gedehnt.

Bei einer alternativen Ausführungsform einer Schneidvorrichtung, welche nicht unter die Ansprüche fällt, ist an dem Maschinengestell eine Vorspannvorrichtung für das Schneidwerkzeug angeordnet, mittels welcher auf gegenüberliegende Lagerenden des Schneidwerkzeugs eine Zugspannung ausübbar ist. Die Vorspannvorrichtung bewirkt also die Vorspannung des Schneidwerkzeugs, um dessen Modenstruktur hinsichtlich der Minimierung eines Wegfederns bei seitlichen Schnittkräften zu verändern. Die Vorspannvorrichtung kann dabei beispielsweise auf Lager wirken, in denen das Schneidwerkzeug drehbar gelagert ist, und zwar mit einer Kraftrichtung parallel zur Drehachse. Die Vorspannvorrichtung kann alternativ auch direkt auf das Schneidwerkzeug wirken, d. h. auf die Schneidwerkzeugwelle, um auf dieses eine Zugspannung auszuüben. Dies kann beispielsweise durch entsprechende Einspannung der Schneidwelle erfolgen oder auch dadurch, dass die Schneidwelle mit Gewichten belastet wird.

Ferner kann auch erfindungsgemäß ein Prägewerkzeug gemäß Anspruch 11 bereitgestellt werden.

Auch hier wiederum ergeben sich die bereits im Zusammenhang mit dem erfindungsgemäßen Schneidwerkzeug diskutierten Vorteile, und weitere vorteilhafte Ausgestaltungen des erfindungsgemäßen Prägewerkzeugs sind analog zu den Ausgestaltungen des erfindungsgemäßen Schneidwerkzeugs gebildet.

Erfindungsgemäß kann es auch vorgesehen sein, dass bei einer Prägevorrichtung gemäß Anspruch 12 ein erfindungsgemäßes Prägewerkzeug vorgesehen ist.

Dadurch ergeben sich bei einem Prägungsvorgang die bereits im Zusammenhang mit Schnittvorgängen diskutierten Vorteile und insbesondere lässt sich dadurch ein Wegfedern des Prägewerkzeugs bei seitlichen Prägekräften verringern.

Weitere vorteilhafte Ausgestaltungen der erfindungsgemäßen Prägevorrichtung wurden bereits im Zusammenhang mit der erfindungsgemäßen Schneidvorrichtung erläutert, wobei nur jeweils anstatt dem Schneidwerkzeug mit der Schneide ein Prägewerkzeug mit Prägestruktur einzusetzen ist.

Das erfindungsgemäße Prägewerkzeug läßt sich insbesondere auch im Zusammenhang mit dem Ultraschallschneiden und/oder Ultraschallschweißen von Werkstückbahnen einsetzen, bei welchem ein rotierendes Prägewerkzeug insbesondere mit einer Sonotrode als Ultraschallwerkzeug zusammenwirkt.

Die Erfindung wird anhand eines Ausführungsbeispiels erläutert.

In der Zeichnung zeigen:
- Figur 1: einen vertikalen Schnitt durch ein Ausführungsbeispiel einer erfindungsgemäßen Schneidvorrichtung längs Linie 1-1 in Figur 2;
- Figur 2: einen vertikalen Schnitt längs Linie 2-2 in Figur 1;
- Figur 3: eine vergrößerte Darstellung von Amboßwalze und Schneidwerkzeug gemäß Figur 2;
- Figur 4: eine schematische Längsschnittansicht durch ein erfindungsgemäßes Schneidwerkzeug;
- Figur 5: eine Ansicht auf das Schneidwerkzeug gemäß Figur 4 in der Richtung B und
- Figur 6: eine schematische Ansicht eines weiteren Ausführungsbeispiels einer erfindungsgemäßen Schneidvorrichtung.

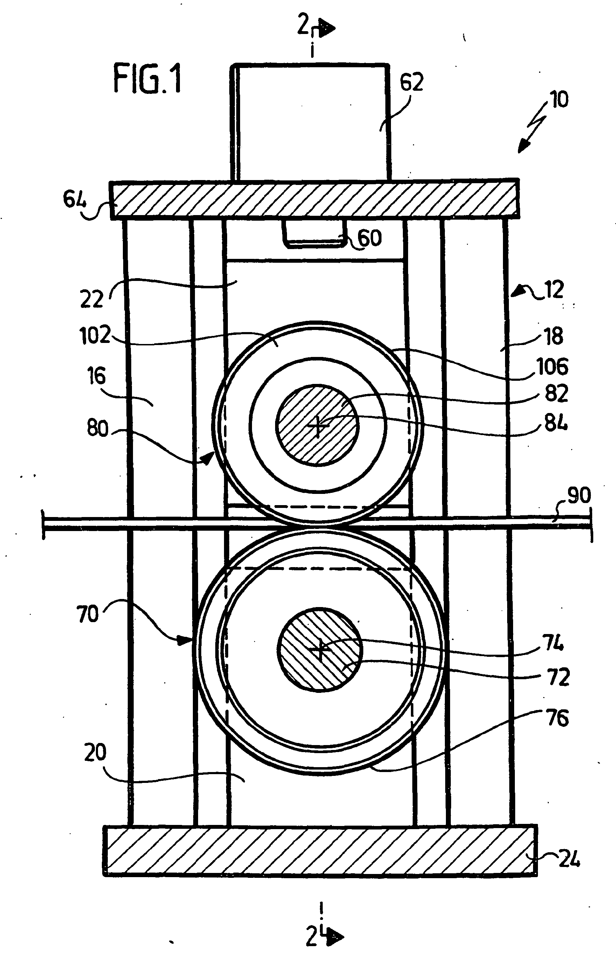

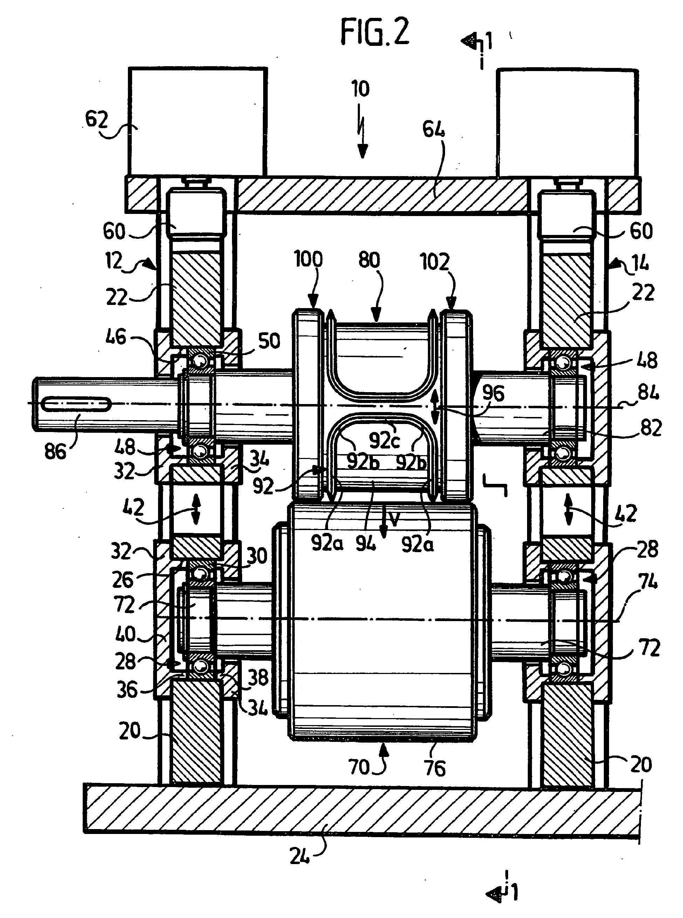

Eine in Figur 1 und 2 jeweils im Schnitt dargestellte erfindungsgemäße Schneidvorrichtung umfaßt ein als Ganzes mit 10 bezeichnetes Maschinengestell, welches zwei im Abstand voneinander angeordnete Lagerteile 12 und 14 aufweist.

Jedes der Lagerteile, beispielsweise das Lagerteil 12 in Figur 1, umfaßt zwei Seitenträger 16 und 18, zwischen denen ein unterer Lagerträger 20 und ein oberer Lagerträger 22 angeordnet sind.

Der untere Lagerträger 20 ist einerseits zwischen den Seitenträgern 16 und 18 geführt und sitzt andererseits fest auf einer Grundplatte 24 des Maschinengestells 10. Der Lagerträger 20 weist dabei eine Lageraufnahme 26 auf, in welche ein als Ganzes mit 28 bezeichnetes unteres Drehlager mit seinem äußeren Lagerring 30 eingesetzt ist, wobei der äußere Lagerring 30 mit seiner Außenumfangsseite an einer Innenfläche der Lageraufnahme 26 anliegt. Der Lagerring 30 ist dabei in der Lageraufnahme 26 durch einen äußeren Haltekörper 32 und einen inneren Haltekörper 34 fixiert, die mit Halteringen 36 und 38 an seitlichen Ringflächen des äußeren Lagerrings 30 anliegen und somit diesen in der Lageraufnahme 26 fixieren. Außerdem umfaßt der äußere Haltekörper 32 noch gleichzeitig eine Abdeckung 40.

Der obere Lagerträger 22 ist zwischen den Seitenträgern 16 und 18 geführt und in einer Richtung 42, welche parallel zur Erstreckung der Seitenträger 16 und 18 verläuft, in Richtung des unteren Lagerträgers 20 verstellbar angeordnet. Auch der obere Lagerträger 22 weist eine Lageraufnahme 46 auf, in welche ein oberes Drehlager 48 eingesetzt ist.

Das obere Drehlager 48 ist mit seinem äußeren Lagerring 50 in gleicher Weise in der Lageraufnahme 46 anliegend gehalten wie das untere Drehlager 28 mit dem äußeren Lagerring 30 und außerdem sind ein äußerer Haltekörper 32 und ein innerer Haltekörper 34 vorgesehen, welche in gleicher Weise ausgebildet sind, wie die im unteren Lagerträger 20 vorgesehenen Haltekörper und in gleicher Weise den äußeren Lagerring 50 des oberen Drehlagers 48 fixieren.

Der obere Lagerträger 22 stützt sich seinerseits über eine als Ganzes mit 60 bezeichnete Vorspanneinrichtung an einem Widerlager 62 ab, welches an einer sich parallel zur Grundplatte 24 erstreckenden oberen Platte 64 gehalten ist, wobei die obere Platte 64 die Lagerteile 12 und 14 ebenfalls miteinander verbindet und auch die Seitenträger 16 und 18 relativ zueinander fixiert.

In gleicher Weise wie das Lagerteil 12 ist auch das Lagerteil 14 ausgebildet.

In den beiden unteren Drehlagern 28 ist jeweils ein Wellenstummel 72 gelagert, welche von einer als Ganzes mit 70 bezeichneten Amboßwalze jeweils seitlich abstehen und konzentrisch zu einer Drehachse 74 der Amboßwalze 70 angeordnet sind, die einen größeren Radius als die Wellenstummel 72 aufweist und mit einer koaxial zur Drehachse 74 angeordneten kreiszylindrischen Amboßfläche 76 versehen ist.

Durch die beiden unteren Drehlager 28 ist somit die Amboßwalze 70 fest in den unteren Lagerträgern 20 gelagert, die ihrerseits wiederum auf der Grundplatte 24 ruhen und zwischen den Seitenträgern 16 und 18 geführt sind.

In den oberen Drehlagern 48 der oberen Lagerträger 22 ist ein rotierend angetriebenes Schneidwerkzeug 80 mit einer Werkzeugwelle 82 um eine Drehachse 84 drehbar gelagert, wobei sich die Werkzeugwelle 82 beispielsweise durch das Lagerteil 12 hindurcherstreckt und auf ihrer dem rotierenden Schneidwerkzeug 80 gegenüberliegenden Seite einen über das Lagerteil 12 überstehenden Antriebsstummel 86 aufweist, über welchen mittels eines Antriebs, beispielsweise eines Motors, ein Drehantrieb des rotierenden Schneidwerkzeugs 80 erfolgt.

Das rotierende Schneidwerkzeug 80 ist durch die Anordnung der oberen Drehlager 48 in den oberen Lagerträgern 22 und deren Verschiebbarkeit in Richtung 42 in Richtung der Amboßwalze 70 bewegbar. Mittels der Vorspanneinrichtungen 60, die auf die oberen Lagerträger 22 wirken, ist das rotierende Schneidwerkzeug 80 so in Richtung der Amboßwalze 70 vorspannbar, daß dieses als Ganzes mit einer Vorspannkraft V auf die Amboßwalze 70 wirkt.

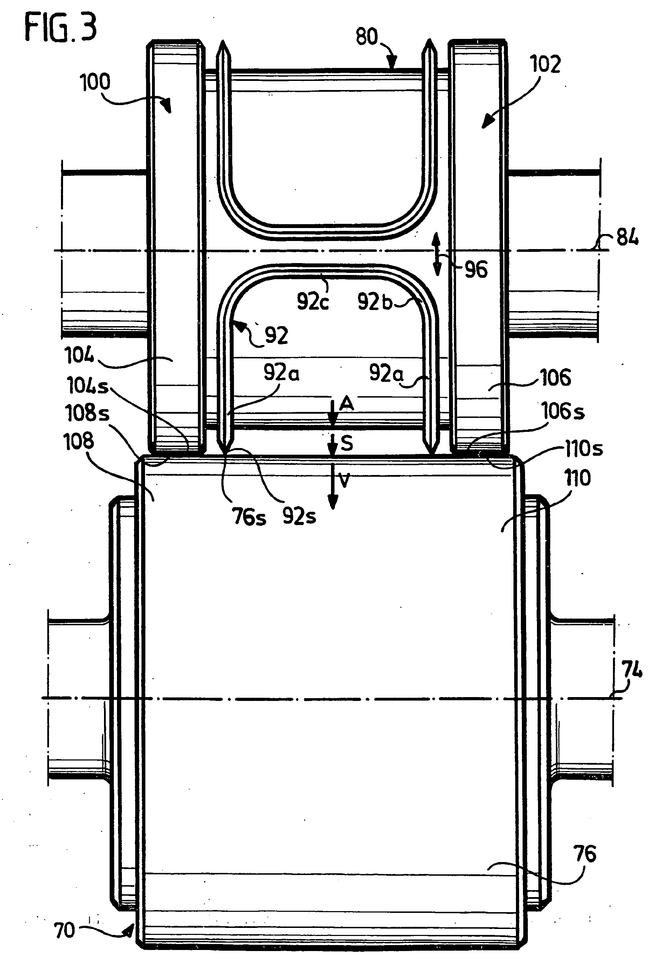

Das rotierende Schneidwerkzeug 80 weist nun zum Durchtrennen einer als Ganzes mit 90 bezeichneten und zwischen dem rotierenden Schneidwerkzeug 80 und der Amboßwalze 70 hindurchgeführten Werkstoffbahn 90 Schneiden 92 auf, welche von einer beispielsweise zur Drehachse 84 zylindrischen Schneidengrundfläche in radialer Richtung zur Drehachse 84 mit konstanter radialer Erstreckung bezüglich der Drehachse überstehen. Beispielsweise umfaßt die Schneide 92 zwei sich in azimutaler Richtung zur Drehachse 84 erstreckende Schneidenschenkel 92a, welche in quer zu dieser verlaufende Schneidenbögen 92b übergehen, die dann durch eine Querschneide 92c, die ungefähr senkrecht zur Azimutalrichtung 96 und somit ungefähr parallel zur Drehachse 84 verläuft, verbunden sind (Figur 3).

Beispielsweise weist die Schneide 92 zwei Querschneiden 92c auf, von denen ausgehend in entgegengesetzte Richtungen jeweils die Schneidenbögen 92b verlaufen, die dann in die Schneidenschenkel 92a übergehen, welche die auf jeder Seite der Querschneiden 92c liegenden Schneidenbögen 92b miteinander verbinden, wie vergrößert in Figur 3 dargestellt.

Die Schneidwirkung der Schneide 92 erfolgt nun, wie in Figur 3 dargestellt, durch Zusammenwirken eines wirksamen Schneidenabschnitts 92s, welcher einem entsprechenden Amboßflächenabschnitt 76s mit minimalstem Abstand gegenübersteht oder diesen nahezu berührt, wobei durch das Rotieren des rotierenden Schneidwerkzeugs 80 und Mitrotieren der Amboßwalze 70 jeweils aufeinanderfolgende Schneidenabschnitte 92s und Amboßflächenabschnitte 76s in ihrer wirksamen Stellung stehen und schneidend zusammenwirken.

Um einen geringen Abstand zwischen den jeweils zusammenwirkenden Schneidenabschnitten 92s und Amboßflächenabschnitten 76s oder ein sogenanntes leichtes Berühren derselben definiert festzulegen, ist das rotierende Schneidwerkzeug 80 so mit zwei drehfest verbundenen Stützringen (Schmitz-Ringen) 100 und 102 versehen, welche beispielsweise beiderseits der Schneide 92 koaxial zur Drehachse 84 angeordnet sind und dabei Stützringflächen 104 bzw. 106 aufweisen, die beispielsweise zylindrisch zur Drehachse 84 angeordnet sind und auf Stützflächen 108 und 110 der Amboßwalze 70 aufliegen, wobei die Stützflächen 108 und 110 beispielsweise durch Teilbereiche der Amboßfläche 76 gebildet werden können.

Die Abstützung erfolgt dabei jeweils über die Stützringabschnitte 104s und 106s, die auf entsprechenden Stützflächenabschnitten 108s und 110s der Stützflächen 108 und 110 aufsitzen, wobei beim Drehen des rotierenden Werkzeugs 80 entgegengesetzt zur Drehrichtung desselben aufeinanderfolgend angeordnete Stützringabschnitte 104s und 106s mit entgegengesetzt zur Drehrichtung der Amboßwalze 70 aufeinanderfolgend angeordneten Stützflächenabschnitten 108s und 110s zusammenwirken.

Die dabei jeweils miteinander zusammenwirkenden Stützringabschnitte 104s, 106s und Stützflächenabschnitte 108s und 110s nehmen dabei insgesamt eine Auflagekraft A auf, mit welcher sich das rotierende Schneidwerkzeug 80 auf der Amboßwalze 70 abstützt und welche einen von der Vorspannkraft V umfaßten Teil derselben darstellt.

Die Vorspannkraft V führt jedoch nicht nur zur Ausbildung der Auflagekraft A, welche über die Stützringe 100 und 102 auf die Amboßwalze 70 wirkt, sondern auch noch zu einer Schneidkraft S, welche im Zusammenhang steht mit einer in dem jeweiligen Schneidenabschnitt 92s wirksamen Schneidenlänge.

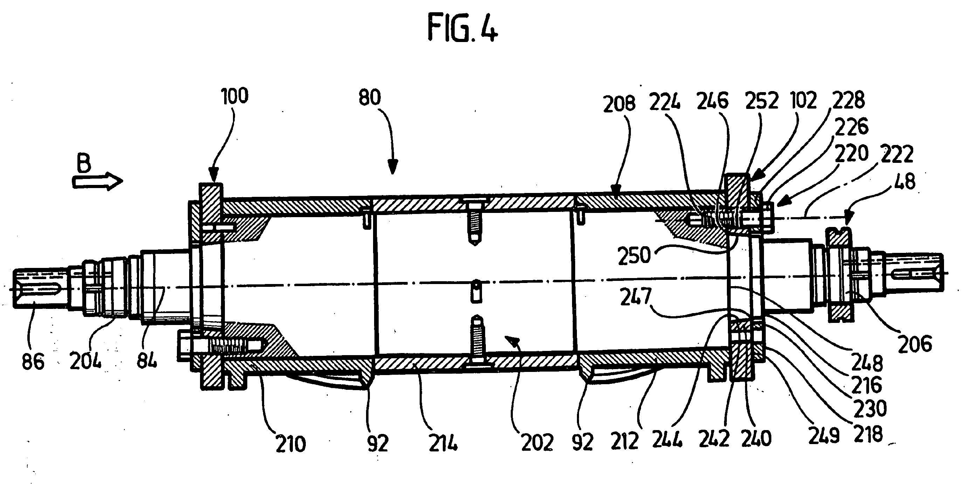

Ein erfindungsgemäßes Schneidwerkzeug umfaßt, wie in Figur 4 gezeigt, ein als Kernwelle ausgebildetes Innenteil 202, welches die Drehachse 84 umfaßt und welches über gegenüberliegende Lagerenden 204, 206 in Drehlagern 48 drehbar gelagert ist.

Auf dem Innenteil 202 sitzt eine Außenhülse 208, welche das Innenteil umgibt, so daß dieses eine Seele des Schneidwerkzeugs 80 bildet. Die Außenhülse 208 ist beispielsweise dreiteilig ausgebildet mit jeweils zwei becherförmigen Außenteilen 210 und 212, welche stirnseitig auf das Innenteil 202 aufschiebbar sind, und einem Mittelteil 214, welches die Form eines Hohlzylinders aufweist und welches zwischen den beiden Außenteilen 210 und 212 auf dem Innenteil 202 sitzt.

Die Außenteile 210 und 212 weisen jeweils Ausnehmungen 216 auf, so daß diese einerseits über die Lagerenden 204, 206 auf das Innenteil 202 aufschiebbar sind und andererseits jeweils eine Ringfläche 218 gebildet ist, mittels welcher sich die Außenteile 210, 212 stirnseitig mit dem Innenteil 202 verbinden lassen.

Die Schneiden 92 sind beispielsweise jeweils an den Außenteilen 210 und 212 angeordnet.

Das Innenteil 202 und die Außenhülse 208 sind miteinander verspannt. Dazu sind als Ganzes mit 220 bezeichnete Formschlußverbindungen vorgesehen, welche in einer Richtung 222 parallel zur Drehachse orientiert sind.

Eine Formschlußverbindung 220 umfaßt Formschlußelemente 224, welche durch Schrauben mit einem Schraubenkopf 226 gebildet sind. Der Schraubenkopf 226 stellt dabei eine Anlagefläche 228 bereit, mittels welcher eine Druckkraft auf eine Stirnseite 230 der Außenhülse 208 in Richtung des Innenteils 202 parallel zur Drehachse 84 ausübbar ist.

Das Formschlußelement 224 wird dabei in das Innenteil 202 getrieben, so daß das Formschlußelement 224 eine Zugkraft auf das Innenteil 202 in Richtung der Außenhülse 208 parallel zur Drehachse 84 ausübt. Dadurch wird das Innenteil 202 mit der Außenhülse 208 verspannt, um die Steifigkeit des Schneidwerkzeugs 80 zu erhöhen und so die Modenstruktur des Schneidwerkzeugs 80 hinsichtlich einer Reduzierung von seitlichen Schnittkräften zu beeinflussen.

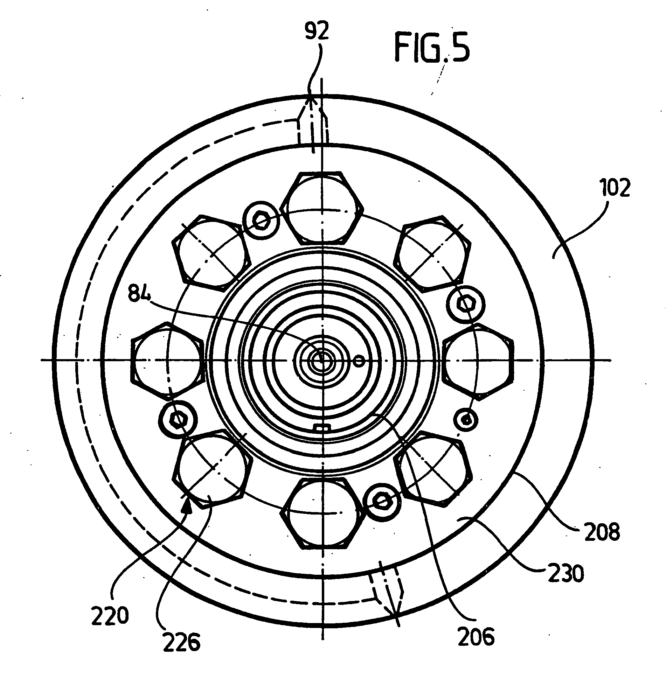

Wie in Figur 5 gezeigt ist, sind eine Mehrzahl von Formschlußelementen gleichmäßig verteilt um die Drehachse 84 stirnseitig an der Außenhülse 208 angeordnet, so daß die Verteilung der Formschlußverbindungen 220 bezogen auf diese Drehachse 84 punktsymmetrisch ist; dadurch läßt sich eine gleichmäßige Zugkraft auf das Innenteil 202 über die Stirnfläche 230 ausüben.

Die Stützringe 100, 102 (Schmitz-Ringe) sind bei einer Variante eines Ausführungsbeispiels auf jeweils einem Dehnkörper 240 angeordnet, welcher die jeweilige Werkzeugwelle 82 in Form eines Dehnkörperrings umschließt und mit einer der Werkzeugwelle 82 zugeordneten Auflagefläche 242 auf einer Umfangsfläche 244 der jeweiligen Werkzeugwelle 82 sitzt und durch diese in radialer Richtung zur Drehachse 84 abgestützt ist.

Ferner liegt der Dehnkörper 240 mit einer der Außenhülse 208 zugewandten Ringfläche 247 an einer inneren Stirnfläche 249 der Außenhülse 208 an. Eine dem Innenteil 202 zugewandte Ringfläche 246 des Dehnkörpers 240 hat dagegen zu einer Stirnseite 248 des Innenteils 202 Luft, um die Dehnung desselben unter der Zugbelastung nicht zu behindern.

Der Dehnkörper 240 ist mit beispielsweise als Schrauben ausgebildeten Spannelementen gegen die Stirnseite 248 fixiert und mit der Ringfläche 246 außerdem kraftschlüssig fixiert.

Bei einer Variante einer Ausführungsform dienen die Formschlußverbindungen 220 gleichzeitig zur Verspannung der Außenhülse mit dem Innenteil 202 und zur Fixierung des Dehnkörpers 240 an dem Innenteil 202 und zur Dehnung des Stützrings 102.

Bei einer alternativen Ausführungsform (in der Zeichnung nicht gezeigt) ist die Fixierung des Dehnkörpers 240 an dem Innenteil 202 unabhängig von den Formschlußverbindungen 220, welche eine Zugspannung auf das Innenteil 202 zur Vorspannung des Schneidwerkzeugs 80 aufweisen. Dazu sind die Formschlußverbindungen 220 entsprechend angeordnet; beispielsweise ist eine Abfolge von Schraubverbindungen bezüglich einer Stirnfläche der Außenhülse 208 vorgesehen, bei welcher Schraubenverbindungen alternierend zur Vorspannung des Schneidwerkzeugs 80 dienen und zur Dehnbarkeit des Stützrings 102 dienen.

Unabhängig von der Art der Fixierung des Dehnkörpers 240 an der jeweiligen Werkzeugwelle 82 hat dieser vorzugsweise bezogen auf die Drehachse 84 einen Radius, der kleiner als ein Radius des Innenteils 202 des Schneidwerkzeugs 80 ist. Der Dehnkörper 240 weist eine zur Drehachse 84 mit einem geringen Konuswinkel verlaufende äußere Konusfläche 250 auf, wobei der Konuswinkel 250 der äußeren Konusfläche beispielsweise ein Kegelverhältnis von 1: 10 hat.

Der jeweilige Stützring ist seinerseits auf einer der Stützringfläche 106 gegenüberliegenden Seite mit einer inneren Konusfläche 252 versehen, welche dasselbe Kegelverhältnis wie die äußere Konusfläche 250 aufweist.

Die Dimensionierung der inneren Konusfläche 252 relativ zur äußeren Konusfläche 250 erfolgt dabei stets so, daß selbst bei minimalem vorgegebenen Durchmesser der Stützringfläche 106 der Stützring 102 selbst durch die innere Konusfläche 252 und die äußere Konusfläche 250 in radialer Richtung zur Drehachse 84 gedehnt ist und somit stets die innere Konusfläche 252 mit Spannung auf der äußeren Konusfläche 250 sitzt, um jegliche radiale Nachgiebigkeit des Stützrings 102 aufgrund der Abstützung desselben über den Dehnkörper 240 zu vermeiden.

Die weitere Ausgestaltung der Dehnkörper und ihre Funktion ist in der nicht vorveröffentlichten deutschen Patentanmeldung Nr. 100 40 024.8 vom 16. August 2000 der Firmenvorgängerin der Anmelderin beschrieben, auf die hiermit ausdrücklich Bezug genommen wird.

Durch Anziehen der Formschlußelemente 224 wird nun einerseits eine Druckkraft stirnseitig auf die Außenhülse 208 in Richtung des Innenteils 202 ausgeübt und eine Zugkraft auf das Innenteil 202 stirnseitig in Richtung der Außenhülse 208 parallel zur Drehachse 84. Dadurch werden Innenteil 202 und Außenhülse 208 miteinander verspannt, d. h. das Schneidwerkzeug 80 wird vorgespannt. Dadurch wiederum erhöht sich die Steifigkeit des Schneidwerkzeugs 80 und die Schwingungs-Modenstruktur gegenüber dem nicht vorgespannten Zustand wird verändert.

Ähnlich dem Einfluß einer Zugspannung auf eine Saite werden bei unveränderter Schwingungsanregung die Eigenfrequenzen erhöht und die Schwingungsamplituden verkleinert bzw. um auch nach der Vorspannung die gleiche Schwingungsamplitude zu erhalten, muß eine höhere Kraft aufgewandt werden. Aufgrund der Lagerung des Schneidwerkzeugs 80 an dem Maschinengestell 10 ist dabei die Kraft auf das Schneidwerkzeug 80, welche Schwingungen anregt, im wesentlichen unabhängig von der Vorspannung zwischen Innenteil 202 und Außenhülse 208 parallel zur Drehachse 84. Dies bedeutet, daß durch die Veränderung der Modenstruktur des Schneidwerkzeugs 80 durch die Vorspannung die Schwingungsamplituden des Schneidwerkzeugs 80 insbesondere auch während eines Schnittvorgangs verringert sind. So wurden bei einer Zugkraft entsprechend 100 t für ein Schneidwerkzeug mit einer Stützweite von 700 mm und einem Durchmesser von 300 mm die Amplitude in der Mitte des Schneidwerkzeugs auf unter 2 µm verringert.

Während eines Schnittvorgangs ist es aufgrund der Schnittkräfte grundsätzlich möglich, daß eine Druckkraft mittels der Außenhülse 208 auf das Innenteil 202 übertragen wird. Die Zugkräfte, welche das Innenteil 202 gegen die Außenhülse 208 verspannen, sind dabei so gewählt, daß sie solche Druckkräfte überkompensieren, so daß auch während eines Schnittvorgangs gewährleistet bleibt, daß durch seitliche Schnittkräfte hervorgerufene Schwingungen des Schneidwerkzeugs 80 minimiert sind.

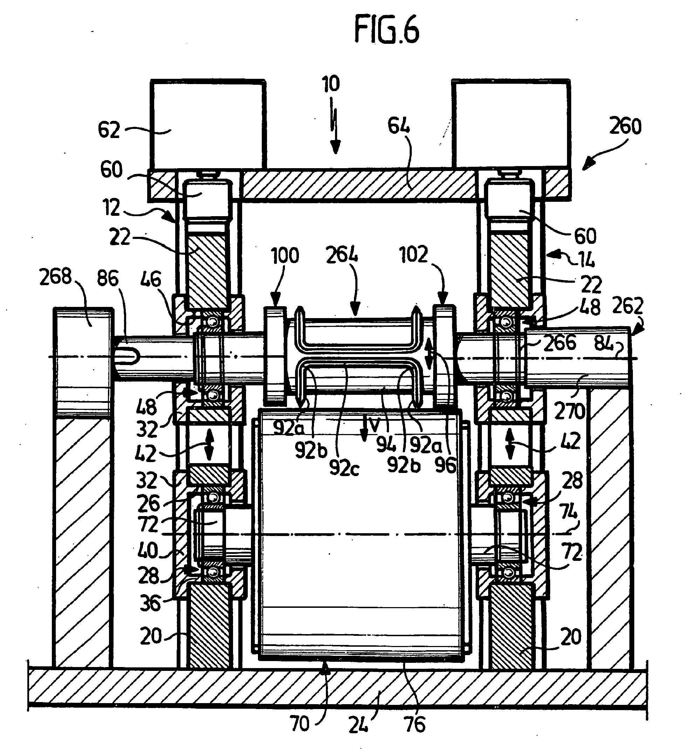

Bei einer Ausführungsform einer nicht erfindungsgemäßen Schneidvorrichtung, welche in Figur 6 als Ganzes mit 260 bezeichnet ist, ist eine als Ganzes mit 262 bezeichnete Vorspannvorrichtung vorgesehen, welche auf Lagerenden des Schneidwerkzeugs wirkt und über welche sich ein Schneidwerkzeug 264 ebenfalls vorspannen läßt.

In der Figur 6 sind dabei gleiche oder gleichwirkende Bauelemente gemäß Figur 2 mit gleichen Bezugszeichen versehen.

Das Schneidwerkzeug 264 weist eine Werkzeugwelle 266 auf, welche in den Lagern 48 am Maschinengestell 10 drehbar gelagert ist.

Durch die Vorspannvorrichtung 262 läßt sich auf gegenüberliegende Lagerenden des Schneidwerkzeugs eine Zugspannung ausüben, um so das Schneidwerkzeug 264 vorzuspannen, d. h. dessen Steifigkeit zu erhöhen und damit wiederum dessen Modenstruktur im Sinne einer Verringerung des Wegfederns bei seitlichen Schnittkräften zu beeinflussen, wie bereits oben anhand des ersten Ausführungsbeispiels einer erfindungsgemäßen Schneidvorrichtung beschrieben.

Die Vorspannung des Schneidwerkzeugs 264 über die Schneidvorrichtung 260 kann dabei beispielsweise dadurch erfolgen, daß die Werkzeugwelle 266 drehbar verschiebungsfest gegenüber der Grundplatte 24 fixiert ist, wobei aber gegenüberliegende Fixierungsvorrichtungen 268 und 270, welche den jeweiligen Enden der Werkzeugwelle 266 zugeordnet sind, relativ zur Grundplatte 24 fixierbar auseinanderbewegbar sind, beispielsweise mit Hilfe einer Präzisionsstellvorrichtung, um auf diese Weise eine Zugspannung über die Lagerenden der Werkzeugwelle auf das Schneidwerkzeug 264 einleiten zu können.

Bei einer alternativen nicht erfindungsgemäßen Ausführungsform kann es auch vorgesehen sein, daß die Enden 268, 270 jeweils durch Gewichte belastet sind, um die erforderliche Vorspannung des Schneidwerkzeugs 264 zur Modifikation dessen Modenstruktur zu verursachen.

Es kann auch vorgesehen sein, daß das Schneidwerkzeug 264 drehbar verschiebungsfest bezüglich der Drehlager 48 angeordnet ist, wobei gegenüberliegende Drehlager (bezogen auf die Enden 268, 270 der Werkzeugwelle 266) relativ zueinander auseinanderbewegbar sind, um so eine Zugkraft auf die Werkzeugwelle 266 einzuleiten und deren Steifigkeit zu erhöhen.

Es kann auch vorgesehen sein, eine Prägevorrichtung mit einem Prägewerkzeug mit einer Prägestruktur so auszubilden, daß das Prägewerkzeug vorgespannt ist. Die vorstehend beschriebenen Ausführungsformen von Schneidvorrichtungen und Schneidwerkzeugen funktionieren auch für Prägevorrichtungen und Prägewerkzeuge.

Prägewerkzeuge, welche um eine Drehachse drehbar sind, lassen sich auch beim Ultraschallschneiden und/oder Ultraschallschweißen einsetzen, bei welchem mittels einer Sonotrode ein Werkstück ultraschallbeaufschlagt wird, wobei das Werkstück auf dem rotierenden Prägewerkzeug an der Sonotrode vorbei transportiert wird und sich so durch die Prägestruktur auf dem Prägewerkzeug entsprechende Werkstückeinprägungen herstellen lassen.

## Patentansprüche

1. Schneidwerkzeug, welches um eine Drehachse drehbar ist, umfassend eine Außenhülse (208), an welcher eine Schneide (92) sitzt, welche mit Ambossflächen (76) einer Ambosswalze (70) in Zusammenwirkung bringbar ist, und ein Innenteil (202), wobei die Außenhülse (208) und das Innenteil (202) mittels Formschlussverbindungen (220) gegeneinander verspannt sind mit einer Spannkraftwirkung im Wesentlichen parallel zur Drehachse (84) des Schneidwerkzeugs (80), wobei das Innenteil (202) parallel zur Drehachse (84) über eine Stirnseite (230) der Außenhülse (208) auf Zug belastet ist und parallel zur Drehachse (84) mit einer solchen Kraft vorgespannt ist, dass eine maximale Schwingungsamplitude des Schneidwerkzeugs (80) unterhalb eines vorgegebenen Werts liegt, wobei die Formschlussverbindungen (220) mehrere Formschlusselemente (224) umfassen, die jeweils durch eine Schraube mit einem Schraubenkopf (226) gebildet sind und eine Anlagefläche (228) aufweisen, mittels welcher eine Druckkraft auf die Stirnseite (230) der Außenhülse (208) ausübbar ist, und an jedem Schraubenkopf (226), welcher jeweils mit der Anlagefläche (228) versehen ist, ein Schraubelement sitzt, mittels dem eine Zugkraft auf das Innenteil (202) parallel zur Drehachse (84) ausübbar ist,
**dadurch gekennzeichnet , dass** die Formschlusselemente (224) mit dem jeweiligen Schraubelement in das Innenteil (202) getrieben sind.

2. Schneidwerkzeug nach Anspruch 1, **dadurch gekennzeichnet, dass** Innenteil (202) und Außenhülse (208) so verspannt sind, dass Druckkräfte auf das Schneidwerkzeug (80) mittels der Zugspannung auf das Innenteil (202) überkompensierbar sind.

3. Schneidwerkzeug nach Anspruch 1 oder 2, **dadurch gekennzeichnet, dass** eine Verbindungsrichtung (222) einer Formschlussverbindung (220) parallel zur Drehachse (84) des Schneidwerkzeugs (80) orientiert ist.

4. Schneidwerkzeug nach einem der Ansprüche 1 bis 3, **dadurch gekennzeichnet, dass** eine Mehrzahl von Formschlussverbindungen (220) gleichmäßig bezogen auf die Drehachse (84) um diese angeordnet sind.

5. Schneidwerkzeug nach einem der Ansprüche 1 bis 4, **dadurch gekennzeichnet, dass** die Abmessungen eines Formschlusselements (224) und/oder die Anzahl der Formschlusselemente an den Durchmesser und die Stützweite des Schneidwerkzeugs (80) angepasst sind.

6. Schneidwerkzeug nach einem der Ansprüche 1 bis 5, **dadurch gekennzeichnet, dass** das Schneidwerkzeug (80) mit Stützringen (100, 102) versehen ist, mittels welchen dieses gegenüber der Ambosswalze (70) abstützbar ist und/oder umgekehrt.

7. Schneidwerkzeug nach Anspruch 6, **dadurch gekennzeichnet, dass** bei jedem Stützring (100, 102) der Durchmesser einer Stützringfläche (104, 106) durch radiale Dehnung des Stützrings (100, 102) im Bereich unterhalb einer elastischen Dehnungsgrenze von dessen Material mittels einer Dehnungsvorrichtung (240, 250, 252) einstellbar ist.

8. Schneidwerkzeug nach Anspruch 6 oder 7, **dadurch gekennzeichnet, dass** mittels eines Formschlusselements (224), mit welchem eine Zugspannung auf ein Innenteil (202) des Schneidwerkzeugs (80) bezüglich einer Außenhülse (208) ausübbar ist, der Durchmesser eines Stützrings (100, 102) einstellbar ist.

9. Schneidwerkzeug nach Anspruch 7 oder 8, **dadurch gekennzeichnet, dass** das Schneidwerkzeug (80) unabhängig von der Dehnung der Stützringe (100, 102) vorspannbar ist.

10. Schneidvorrichtung, umfassend ein Maschinengestell (10), eine Ambosswalze (70), welche an dem Maschinengestell (10) drehbar gelagert ist, und ein Schneidwerkzeug (80) gemäß einem der vorangehenden Ansprüche, welches drehbar an dem Maschinengestell (10) gelagert ist.

11. Prägewerkzeug, welches um eine Drehachse drehbar ist, umfassend eine Außenhülse, an welcher eine Prägestruktur sitzt, welche mit Ambossflächen einer Ambosswalze in Zusammenwirkung bringbar ist, und ein Innenteil, wobei die Außenhülse und das Innenteil mittels Formschlussverbindungen gegeneinander verspannt sind mit einer Spannkraftwirkung im Wesentlichen parallel zur Drehachse des Prägewerkzeugs, wobei das Innenteil parallel zur Drehachse über eine Stirnseite der Außenhülse auf Zug belastet ist und parallel zur Drehachse mit einer solchen Kraft vorgespannt ist, dass eine maximale Schwingungsamplitude des Prägewerkzeugs unterhalb eines vorgegebenen Werts liegt, wobei die Formschlussverbindungen mehrere Formschlusselemente umfassen, die jeweils durch eine Schraube mit einem Schraubenkopf gebildet sind und eine Anlagefläche aufweisen, mittels welcher eine Druckkraft auf die Stirnseite der Außenhülse ausübbar ist, und an jedem Schraubenkopf, welcher jeweils mit der Anlagefläche versehen ist, ein Schraubelement sitzt, mittels dem eine Zugkraft auf das Innenteil parallel zur Drehachse ausübbar ist,
**dadurch gekennzeichnet , dass** die Formschlusselemente mit dem jeweiligen Schraubelement in das Innenteil getrieben sind.

12. Prägevorrichtung, umfassend ein Maschinengestell, eine Ambosswalze, welche an dem Maschinengestell drehbar gelagert ist, und ein Prägewerkzeug gemäß Anspruch 11, welches drehbar an dem Maschinengestell gelagert ist.

## Claims

1. Cutting tool rotatable about an axis of rotation, comprising an outer sleeve (208), a cutting edge (92) being seated on said sleeve and being adapted to be brought into cooperation with anvil surfaces (76) of an anvil roller (70), and an inner section (202), wherein the outer sleeve (208) and the inner section (202) are braced against one another by means of form-locking connections (220) with a tensioning force acting essentially parallel to the axis of rotation (84) of the cutting tool (80), wherein the inner section (202) is subject to a tensile load parallel to the axis of rotation (84) via an end face (230) of the outer sleeve (208) and is biased parallel to the axis of rotation (84) with such a force that a maximum oscillation amplitude of the cutting tool (80) is below a predetermined value, wherein the form-locking connections (220) comprise several form-locking elements (224) each formed by a screw with a screw head (226) and having a contact surface (228), a pressure force being exertable on the end face (230) of the outer sleeve (208) by means of said contact surface, and a screw element is seated on each screw head (226) respectively provided with the contact surface (228), a tensile force being exertable on the inner section (202) parallel to the axis of rotation (84) by means of said screw element, **characterized in that** the form-locking elements (224) are driven into the inner section (202) with the respective screw element.

2. Cutting tool as defined in claim 1, **characterized in that** inner section (202) and outer sleeve (208) are biased such that pressure forces on the cutting tool (80) are adapted to be overcompensated by means of the tensile stress on the inner section (202).

3. Cutting tool as defined in claim 1 or 2, **characterized in that** a connection direction (222) of a form-locking connection (220) is oriented parallel to the axis of rotation (84) of the cutting tool (80).

4. Cutting tool as defined in any one of claims 1 to 3, **characterized in that** a plurality of form-locking connections (220) are arranged around the axis of rotation (84) uniformly in relation to it.

5. Cutting tool as defined in any one of claims 1 to 4, **characterized in that** the dimensions of a form-locking element (224) and/or the number of form-locking elements are adapted to the diameter and the span of the cutting tool (80).

6. Cutting tool as defined in any one of claims 1 to 5, **characterized in that** the cutting tool (80) is provided with supporting rings (100, 102), the cutting tool being supportable in relation to the anvil roller (70) and/or vice versa by means of said supporting rings.

7. Cutting tool as defined in claim 6, **characterized in that** the diameter of a supporting ring surface (104, 106) is adjustable for each supporting ring (100, 102) due to radial expansion of the supporting ring (100, 102) in the range below an elastic expansion limit of its material by means of an expansion device (240, 250, 252).

8. Cutting tool as defined in claim 6 or 7, **characterized in that** the diameter of a supporting ring (100, 102) is adjustable by means of a form-locking element (224), a tensile stress being exertable on an inner section (202) of the cutting tool (80) in relation to an outer sleeve (208) by means of said form-locking element.

9. Cutting tool as defined in claim 7 or 8, **characterized in that** the cutting tool (80) is adapted to be biased independently of the expansion of the supporting rings (100, 102).

10. Cutting device, comprising a machine frame (10), an anvil roller (70) mounted for rotation on the machine frame (10) and a cutting tool (80) according to any one of the preceding claims, said cutting tool being mounted for rotation on the machine frame (10).

11. Embossing tool rotatable about an axis of rotation, comprising an outer sleeve, an embossing structure being seated on said sleeve and being adapted to be brought into cooperation with anvil surfaces of an anvil roller, and an inner section, wherein the outer sleeve and the inner section are braced against one another by means of form-locking connections with a tensioning force acting essentially parallel to the axis of rotation of the embossing tool, wherein the inner section is subject to a tensile load parallel to the axis of rotation via an end face of the outer sleeve and is biased parallel to the axis of rotation with such a force that a maximum oscillation amplitude of the embossing tool is below a predetermined value, wherein the form-locking connections comprise several form-locking elements each formed by a screw with a screw head and having a contact surface, a pressure force being exertable on the end face of the outer sleeve by means of said contact surface, and a screw element is seated on each screw head respectively provided with the contact surface, a tensile force being exertable on the inner section parallel to the axis of rotation by means of said screw element, **characterized in that** the form-locking elements are driven into the inner section with the respective screw element.

12. Embossing device, comprising a machine frame, an anvil roller mounted for rotation on the machine frame and an embossing tool according to claim 11, said embossing tool being mounted for rotation on the machine frame.

## Revendications

1. Outil de coupe rotatif autour d'un axe de rotation, comprenant un manchon extérieur (208) sur lequel repose un tranchant (92) pouvant être amené à coopérer avec des surfaces d'application (76) d'un rouleau d'application (70), et une pièce intérieure (202), le manchon extérieur (208) et la pièce intérieure (202) étant serrés l'un contre l'autre au moyen de raccords d'accouplement mécanique (220), sous l'effet d'une force de serrage sensiblement parallèlement à l'axe de rotation (84) de l'outil de coupe (80), la pièce intérieure (202) subissant une contrainte de traction parallèlement à l'axe de rotation (84) par l'intermédiaire d'une face frontale (230) du manchon extérieur (208) et étant précontrainte par une telle force, parallèlement à l'axe de rotation (84), qu'une amplitude d'oscillation maximale de l'outil de coupe (80) est inférieure à une valeur définie, les raccords d'accouplement mécanique (220) comprenant plusieurs éléments d'accouplement mécanique (224) formés chacun d'une vis avec une tête de vis (226) et comportant une surface d'appui (228) au moyen de laquelle une force de pression peut être exercée sur la face frontale (230) du manchon extérieur (208), et un élément fileté reposant sur chaque tête de vis (226) pourvue de la surface d'appui (228), au moyen duquel une force de traction peut être exercée sur la pièce intérieure (202) parallèlement à l'axe de rotation (84), **caractérisé en ce que** les éléments d'accouplement mécanique (224) sont introduits dans la pièce intérieure (202) par les éléments filetés correspondants.

2. Outil de coupe selon la revendication 1, **caractérisé en ce que** la pièce intérieure (202) et le manchon extérieur (208) sont serrés de telle manière que les forces de pression sur l'outil de coupe (80) peuvent être surcompensées par la contrainte de traction sur la pièce intérieure (202).

3. Outil de coupe selon la revendication 1 ou la revendication 2, **caractérisé en ce qu'**une direction d'accouplement (222) d'un raccord d'accouplement mécanique (220) est orientée parallèlement à l'axe de rotation (84) de l'outil de coupe (80).

4. Outil de coupe selon l'une des revendications 1 à 3, **caractérisé en ce que** plusieurs raccords d'accouplement mécanique (220) sont disposés autour de l'axe de rotation (84), de manière régulière par rapport à celui-ci.

5. Outil de coupe selon l'une des revendications 1 à 4, **caractérisé en ce que** les dimensions d'un élément d'accouplement mécanique (224) et/ou le nombre des éléments d'accouplement mécanique sont adaptés au diamètre et à la portée de l'outil de coupe (80).

6. Outil de coupe selon l'une des revendications 1 à 5, **caractérisé en ce que** l'outil de coupe (80) est muni de bagues d'appui (100, 102) au moyen desquelles il peut s'appuyer contre le rouleau d'application (70) et/ou inversement.

7. Outil de coupe selon la revendication 6, **caractérisé en ce que** pour chaque bague d'appui (100, 102), le diamètre d'une surface de bague d'appui (100, 102) est réglable par déformation radiale de la bague d'appui (100, 102) dans la plage en-dessous d'une limite de déformation élastique de son matériau, au moyen d'un mécanisme de déformation (240, 250, 252).

8. Outil de coupe selon la revendication 6 ou 7, **caractérisé en ce que** le diamètre d'une bague d'appui (100, 102) est réglable au moyen d'un élément d'accouplement mécanique (224) par lequel une contrainte de traction peut être exercée sur une pièce intérieure (202) de l'outil de coupe (80) par rapport à un manchon extérieur (208).

9. Outil de coupe selon la revendication 7 ou la revendication 8, **caractérisé en ce que** l'outil de coupe (80) peut être précontraint indépendamment de la déformation des bagues d'appui (100, 102).

10. Dispositif de coupe, comprenant un bâti de machine (10), un rouleau d'application (70) monté de manière à être rotatif sur le bâti de machine (10), et un outil de coupe (80) selon l'une des revendications précédentes, monté de manière à être rotatif sur le bâti de machine (10).

11. Outil d'estampage rotatif autour d'un axe de rotation, comprenant un manchon extérieur sur lequel repose une structure d'estampage pouvant être amenée à coopérer avec des surfaces d'application d'un rouleau d'application, et une pièce intérieure, le manchon extérieur et la pièce intérieure étant serrés l'un contre l'autre au moyen de raccords d'accouplement mécanique, sous l'effet d'une force de serrage sensiblement parallèlement à l'axe de rotation de l'outil d'estampage, la pièce intérieure subissant une contrainte de traction parallèlement à l'axe de rotation par l'intermédiaire d'une face frontale du manchon extérieur et étant précontrainte par une telle force, parallèlement à l'axe de rotation, qu'une amplitude d'oscillation maximale de l'outil d'estampage est inférieure à une valeur définie, les raccords d'accouplement mécanique comprenant plusieurs éléments d'accouplement mécanique formés chacun d'une vis avec une tête de vis et comportant une surface d'appui au moyen de laquelle une force de pression peut être exercée sur la face frontale du manchon extérieur, et un élément fileté reposant sur chaque tête de vis pourvue de la surface d'appui, au moyen duquel une force de traction peut être exercée sur la pièce intérieure parallèlement à l'axe de rotation, **caractérisé en ce que** les éléments d'accouplement mécanique sont introduits dans la pièce intérieure par les éléments filetés correspondants.

12. Dispositif d'estampage, comprenant un bâti de machine, un rouleau d'application monté de manière à être rotatif sur le bâti de machine, et un outil d'estampage selon la revendication 11, monté de manière à être rotatif sur le bâti de machine.
